(19) **Europäisches Patentamt / European Patent Office / Office européen des brevets**

(11) **EP 2 388 963 B1**

(12) **EUROPEAN PATENT SPECIFICATION**

(45) Date of publication and mention
of the grant of the patent:
**03.10.2012  Bulletin 2012/40**

(51) Int Cl.:
*H04L 12/56* (2006.01)     *H04L 12/18* (2006.01)

(21) Application number: **10163495.4**

(22) Date of filing: **20.05.2010**

(54) **Method and apparatus for scheduling packets**

Verfahren und Gerät für die Ablaufkoordination von Paketen

Procédé et appareil pour l'ordonnancement de paquets

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**23.11.2011  Bulletin 2011/47**

(73) Proprietor: **NTT DoCoMo, Inc.
Tokyo (JP)**

(72) Inventors:
• **Jurca, Dan
81373, Munich (DE)**
• **Munaretto, Daniele
80335, Munich (DE)**
• **Widmer, Jörg
81539, Munich (DE)**

(74) Representative: **Betten & Resch
Theatinerstrasse 8
80333 München (DE)**

(56) References cited:
**EP-A1- 1 718 002     EP-A1- 2 068 492
US-A1- 2002 141 447**

**Description**

**FIELD OF INVENTION**

The present invention relates to a method and an apparatus for scheduling packets.

**BACKGROUND OF THE INVENTION**

Multicast/Broadcast services in cellular networks are provided through a single dedicated channel (MCH/BCH). The Base Station (BS) chooses an appropriate modulation and coding scheme, usually in order to accommodate even the user with the worst channel conditions, given the total available physical resources of the channel. This turns into limiting the decisions that a base station can take when sending different streams coming from the core network to the wireless users. Multiple video multicast streams (e.g., different streams directed to different multicast groups in the same cell) or multiple video broadcast streams (e.g., different streams offering different video qualities for the users in one cell), or multiple video broadcast substreams (e.g., scalable video layers encoded with H.264/SVC, when users in the cell can subscribe to one of more video layers/streams, hence accessing different quality or resolution levels) may be sent on the MCH/BCH channel using different modulation and coding schemes, hence addressing users with different channel conditions. For example, a low quality video stream, encoded at a low bitrate can be broadcast with an appropriate modulation and coding scheme (MC) so that all users in the cell correctly receive the packets and play the video, no matter what their channel conditions are, while an additional high quality video stream, encoded at high bitrate, can be broadcast at a higher MC, and hence can be decoded only by users with good channel conditions. Packets of each individual stream/substream may use a dedicated queue inside the base station. In this context, the base station requires a scheduling mechanism which decides at each time instance which stream to schedule for transmission. An opportunistic and flexible scheduling scheme based on the instantaneous user distribution, the users' channel quality, and the MC schemes decided for each available stream, would allow selecting the queue from which packets must be sent into the channel with high priority. This would allow the delivery of simultaneous sub-streams to different quality-based classes of users in an efficient way, which exploits the instantaneous variations of the users channel conditions to increase the overall users perceived QoS/QoE.

The relevant prior art focuses on three main aspects. First, in the case of unicast wireless transmissions, opportunistic schedulers are presented which act upon the instantaneous changes of the channel conditions of the active users such as e.g. in "Opportunistic fair scheduling for the downlink of IEEE 802.16 wireless metropolitan area networks", M. Mehrjoo, M. Dianati, X. Shen and K. Naik, ACM Proceedings of the 3rd international conference on Quality of service in heterogeneous wired/wireless networks, 2006". The scheduler schedules for transmission packets for the user experiencing the best channel conditions at a given time instant. Furthermore, fairness issues may be taken into account in order to mitigate the problem of user starvation, in case a user experiences a bad channel for a long period. Solutions concentrate on the idea of defining fairness metrics among active users, and keeping history information about prior scheduling decisions. In general, the type of content being scheduled is not taken into consideration.

Second, the problem of opportunistic scheduling is addressed in broadcast scenarios such as in US 2008/0225823 A1. The type of content usually matters in this context and so does the user preference for a given piece of content. The opportunistic scheduling decision is based on the user preferences/content popularity, and takes into account various constraints, e.g., transmission or storage capacity. From this point of view, the presented scheduling solutions function at a different layer, i.e., the application or control plane, and optimize the type of content that is transmitted at a coarse level. These solutions do not take into account the instantaneous channel variations perceived by the wireless users, and do not attempt an optimization of the channel resource allocation on fine grained time intervals in order to make the wireless transmission process more efficient.

Finally, the third related area concentrates around the problem of optimizing the resource allocation at the application and network/MAC layer such as e.g. in "Resource Allocation for Scalable Video Broadcast in Wireless Cellular Networks", J. Kim , J. Cho and H. Shin, IEEE WiMob 2005, pages 174-180. Usually algorithms are defined in order to choose the right application rate and adaptive modulation and coding scheme in order to maximize/minimize a given metric. These algorithms perform on a coarser time scale, and usually assume average channel conditions and application metrics.

EP 1 718 002 A1 discloses a user selection method and device for data packet services in wireless communication systems. A method of selecting users (1a...1n) for allocation of transmission resources for downlink packet transmission from a base station (2) of a wireless communication system, in particular for HSDPA service, determines a time-variable weight for each user and selects, for resource allocation, the users with the greatest weights. Such weight is calculated as a linear combination of normalised parameters related with the channel fading, the buffer occupancy and the timing of pending retransmissions of packets that have not been correctly received by the user (1a...1n).

## SUMMARY OF THE INVENTION

According to one embodiment there is provided a scheduling method for scheduling packets of a plurality of n video streams which are multicast or broadcast at a base station, said scheduling method selecting from the available queues at each scheduling round the queue from which the next packet is to be scheduled for transmission, said scheduling method performing said selection based on the following:

a set of initial parameters which is provided to said scheduler in advance of said selection and which is based on average channel conditions averaged over more than one scheduling round, said parameters comprising:
i. the number n of queues qi, where each queue qi contains packets from a specific video stream of said n video streams;
ii. for each queue qi, the intended modulation and coding scheme MCi for the broadcast transmissions of said queue qi;
iii. for each queue qi, the intended number of users NUAVGi for the reception of packets from said queue qi;

and said selection further being based on instantaneous channel conditions of the individual users receiving said video streams, wherein said scheduling method further comprising:
for each queue qi, determining whether based on the instantaneous channel conditions of the users a variation of said set of initial parameters is possible by determining one of the following:

a) for each queue qi, determining the difference between the intended number of users NUAVGi and the instantaneous number of users which are able to receive packets from that queue qi based on the modulation and coding scheme qi to thereby obtain a differential number of users DUi for said queue qi as a possible variation of said parameters; or

b) for each queue qi, determining a higher modulation and coding scheme HMCi different from the one assigned to this queue qi by said initial set of parameters as a possible variation of said initial parameters, said higher modulation and coding scheme HMCi being determined such that it achieves a higher possible rate, and further being determined under the condition that the expected instantaneous number of users which based on their instantaneous channel conditions are able to decode said higher modulation and coding scheme HMCi is at least as large as the intended number of users NUAVGi for said queue qi as given by said initial set of parameters; and said method further comprising:

based on said possible variation of parameters (DUi or HMCi), determining for each queue qi a profit indicator indicating the overall profit for the network or the users if said variation of initial parameters is used for transmitting the next packet;
selecting the queue qi for which said profit indicator is maximum as the queue from which the next packet is selected.

In this manner there can be made use of instantaneous changes of the channel conditions to either "elevate" the number of users which can receive a packet with a certain higher quality thereby enhancing the perceived quality for some of the users, or the resources of the network can be saved based on a variation of the initial parameters.
According to one embodiment said initial set of parameters further comprises:

iv. for each queue qi, the relative importance DVi of the packets in said queue qi;

wherein said possible variation of said initial set of parameters comprises said differential number of users DUi, and wherein said profit indicator for each queue qi is determined based on the differential number of users DUi multiplicated with the relative importance DVi of the packets in said queue qi.
This is a convenient and efficient way of calculating a profit indicator which can be used for the scheduling decision.
According to one embodiment said possible variation of said initial set of parameters comprises to use said higher modulation and coding scheme HMCi, wherein said higher modulation and coding scheme is chosen such that for a given queue qi the highest possible modulation scheme which still can be received by at least the intended number of users NUAVGi is chosen as the higher modulation and coding scheme HMCi for said queue, and wherein said profit indicator for a queue qi is based on the reduction in transmission time which is achieved by using said higher modulation and coding scheme HMCi for said queue qi, and wherein the queue qi where said profit indicator is maximum is chosen for the transmission of said next packet, and where the next packet then is transmitted using the higher modulation and coding scheme HMCi.

This enables a further variation of the initial set of parameters which saves resources of the network in case of an instantaneous improvement of the channel conditions.

According to one embodiment said possible variation of initial parameters for a certain queue qi comprises a higher modulation and coding scheme HMCi and a differential number of users Dui which are additionally able to receive the video stream of queue qi even when said stream is encoded at said higher coding and modulation scheme HMCi, and wherein said profit indicator is determined based on the product of DUi and the relative importance Dvi of the stream of queue qi divided by the reduction in transmission time which is necessary when using said higher modulation and coding scheme HMCi.

In such a way a hybrid scheduler can be implemented which takes into account the differential number of users as well as the bandwidth saving obtained by changing the modulation and coding scheme.

According to one embodiment the selection of a queue from which the next packet is to be scheduled is based on the differential number of users DUi multiplicated with the relative importance DVi of the packets in said queue qi, and wherein

the next packet which is to be transmitted is transmitted based on a higher modulation and coding scheme HMCi which is chosen based on the instantaneous channel conditions of the users which are capable to receive packets from said selected queue.

This enables a scheduler which bases the scheduling decision on the differential number of users but with a higher modulation and coding scheme, if possible.

According to one embodiment said initial parameters are chosen such that the aggregated rates of the n video streams, given their chosen modulation and coding scheme, do not exceed the channel capacity.

This ensures that the setting of the initial parameters is such that the packets of the different queues can certainly be accommodated by the scheduler, so that independent of whether opportunistic chances are used or not, all packets can be transmitted.

According to one embodiment said relative importance indicator DVi is a quality indicator indicating the quality difference between two different video streams.

By using a quality indicator the system can be applied in a scenario where different queues relating to different qualities, such as in scalable video coding.

According to one embodiment said n video streams are ranked according to their relative importance or priority, and each of said video streams and its corresponding queue has assigned a corresponding relative importance indicator.

In this way the mechanism can be applied to environments where there are multiple queues with different importance, such as e.g. a soccer game viewed from different angles.

According to one embodiment said video streams are video streams which are encoded according to one of the following coding schemes:

scalable video coding SVC ; or
multiple description coding MDC.

These are concrete examples of environments where the invention may be applied.

**DETAILED DESCRIPTION**

First of all, some terms used in the following description will be explained.

3GPP: 3rd Generation Partnership Project
BCH: Broadcast Channel
BS: Base Station
CQI: Channel Quality Indicator
CP: Content Provider
FEC: Forward Error Correction
GOP: Group of Pictures
MBMS: Multimedia Broadcast Multicast Service
MC: Modulation and Coding Scheme
MCH: Multicast Channel
SNR: Signal to Noise Ratio

According to one embodiment there is provided an opportunistic scheduler for media broadcast in wireless environments. The control function of the scheduler takes into account the instantaneous channel conditions of the groups of users subscribed to a particular media stream, and the relative quality difference between the different competing streams. Based on these parameters, at each time instance the scheduler takes the decision on the current stream to be transmitted.

One may assume that the base station temporarily buffers packets from different video streams in different queues before the transmission on the wireless medium. Each stream is dedicated to a possibly different user group and, depending on the aggregated channel conditions of the group, can be modulated with a possibly different modulation and coding scheme. The user groups can be independent (e.g., in the case of different video streams, one for each user group, or different streams of different quality levels of the same video), or inclusive (e.g., in the case of different scalable sub-streams of the same video, providing different quality levels to different users, grouped according to their channel conditions). For simplicity, one may also assume that the aggregated rates of the scheduled streams, given their chosen modulation and coding scheme, do not exceed the channel capacity (e,g., computed per GOP). An embodiment for handling the case where the aggregated rates do exceed the channel capacity will be discussed later. The stream rates and modulation and coding schemes (MC) associated to each queue are the result of solving an optimization problem. The computation is performed periodically, based on average channel conditions of the target users. In other words, the initial set of parameters comprises stream rates and modulation and coding schemes (MC) which are periodically calculated based on a coarser time scale and based on the average channel conditions of the users (averaged over a period larger than one scheduling round).

The opportunistic scheduler according to an embodiment of the invention, however, schedules at each time instant the available packets in the transmission queues. The scheduler is informed about the instantaneous channel quality of each user through the feedback channel (via uplink), and is able to take this information into account in its scheduling decision at each scheduling round. For each user group associated to one video stream buffered in one queue at the base station, it computes the instantaneous channel conditions. At each time instant, the scheduler then opportunistically schedules for transmission the queue associated to the user group which currently experiences good channel conditions, while at the same time taking into account the relative importance of the content of the queued video streams.

In case the associated queue is empty, the scheduler picks the next best user group (w.r.t. channel conditions and content). The procedure ensures the efficient use of wireless resources, increasing the possibility of correct reception of the scheduled packets by each user group in case of multiple scheduled video streams, or alternatively increases the overall user perceived video quality in the case of scalable video streaming with multiple enhancement layer sub-streams. Furthermore, under the aforementioned assumptions, the scheduler actions should not cause buffer overflows at the base station, or play-out shortages at the client side.

According to an embodiment of the invention there are a plurality of queues qi, each corresponding to one video stream. There is a set of initial parameters which are obtained based on average channel conditions over a period longer than one scheduling round. These initial parameters comprise:

i) the number n of queues qi, where each queue qi contains packets from a specific video stream of said n video streams;

ii) for each queue qi, the intended modulation and coding scheme MCi for the broadcast transmissions of said queue qi;

iii) for each queue qi, the intended number of users NUAVGi for the reception of packets from said queue qi.

In other words, as a basic setting the number of queues qi, the number of intended users for each queue, and the corresponding modulation and coding scheme are determined.

These parameters in some sense may be regarded as the "basis" on top of which then the scheduler operates. The parameters are based on average channel conditions, and they are therefore in some sense "long-term" oriented in the sense that they are not based on the instantaneous conditions at a certain scheduling round. This is because the averaging tends to ignore short-term variations in the channel conditions. Nevertheless these initial parameters are important as the "basic setting", they may be derived from some optimization algorithm as known from the art.

Moreover, according to an embodiment the initial parameters not only are based on average channel conditions but further are calculated not for each and every individual scheduling round but are valid for more than one scheduling round. The reason for this may be that the calculation of the "initial parameters" is computational relatively costly so that it cannot be calculated once again every time for each new scheduling round. It would, however, still be desirable to take into account any "instantaneous changes" in channel conditions which could then lead to a more "fine-grained" calculation taking into account such instantaneous channel conditions for every scheduling round.

The scheduler according to an embodiment of the invention therefore then starts to operate based on this "basic setting" (the initial set of parameters), by varying the parameters of the initial setting based on the instantaneous channel conditions. It therefore uses as a basis in the initial set of parameters resulting from the more "coarse-grained" calculation, and then performs a more "fine-grained" calculation which is based on these initial parameters and varies them by taking into account instantaneous channel conditions. Such a "variation" of the initial set of parameters can be performed in a manner which is computationally less costly than the full computation of the set of initial parameters, and it therefore can be performed for every scheduling round. It thereby improves the overall performance because it performs an adaptation to the instantaneous channel conditions based on a calculation which can be performed for each scheduling round by taking into account instantaneous variations of the channel conditions. Even if the calculation of the initial set of parameters cannot be performed so fast that it calculates and takes into account the average values for each scheduling round to calculate the initial set of parameters, still an adaptation becomes possible by such a method by varying these initial parameters based on the instantaneous channel conditions.

A first parameter which can be varied is the intended number of users. It may happen that because of the good channel conditions the number of users which can receive packets through a certain MC is actually higher than in the initial set of parameters. Such a difference in the number of users (a "differential number of users") is determined for each queue.

Another parameter which could be varied is the modulation and coding scheme for a certain queue, E.g. because of good channel conditions it may be possible that for a certain queue a higher C with a higher transmission rate than in the initial parameters may be used while still serving the same number of intended users as in the initial set of parameters. Such a higher modulation and coding scheme HMCi is determined for each queue.

Then one (or both) of these possible variations are used to determine a profit parameter for each queue indicating the overall profit for the network or the users if said variation of initial parameters is used for transmitting the next packet. The queue for which the profit indicator is maximum is then used to be scheduled next in this round. In case of the variation of the MC this also involves a change in the MC with which the packet is transmitted, in case of the variation in the initial set of parameters leading to a larger number of users the scheduling does not involve any change in the modulation and coding scheme.

The foregoing showed that there are two "flavours" of the same opportunistic scheduler operating according to the same principle. The difference between them is the kind of variation in the initial set of parameters which is made use of, but both are based on a "possible" change of the initial set of parameters and a determination of corresponding profit indicator. The differences between these two approaches which differ slightly in the optimization problem and in the scheduling decisions to be taken may be described as follows:

1. Video quality-based opportunistic scheduler: Video packets are selected from a specific queue so that the number of users that can receive a video quality layer with a given MC at a certain time instant is maximized. This method enhances the overall video quality of the whole system, by increasing the size of the individual groups of users receiving a specific video layer;

2. Robust opportunistic scheduler: The base station selects the packets from the queue as explained above. However, instead of maximizing the number of users capable of correct reception by transmitting at the previously established MC, the base station increases the transmission MC, to serve the same number of users but using fewer wireless resources. The new MC is chosen so that the resulting target user group is not smaller as the previously computed one. The potential savings in channel rate by using a higher MC can then be used:

   a. For adopting lower MCs later on in case the channel quality decreases,
   b. In other sessions (resource redistribution),
   c. To retransmit the most important video packets of the video to increase the probability of correctly receiving such packets,
   d. To provide additional FEC (by the Optimizer) via communication between modules.

The embodiments provide an opportunistic and thus flexible scheduling mechanism at the base station which enhances the overall perceived video quality by end users, thus the overall users' satisfaction. Moreover, the possibility of scaling the quality of the video services provided to different classes of users (e.g., based on pricing policies) in a flexible and opportunistic fashion is appealing for a mobile operator, which allows the base station to make use of the allocated resources in order to best meet the users' video quality expectation and the video streaming application's requirements at any time instant. This is possible by exploiting the instantaneous user distribution and the users' channel quality in the cell (in addition to the "overall" or "average" user distribution and channel quality). Further advantages are achievable when considering multiple multicast or broadcast streams. With such an opportunistic scheduler, it is possible to better use the unique dedicated channel and make sure that any time instant the base station opportunistically schedules for transmission the queue associated to the user group which currently maximizes the profit indicator.

In the following, further embodiments will be described.

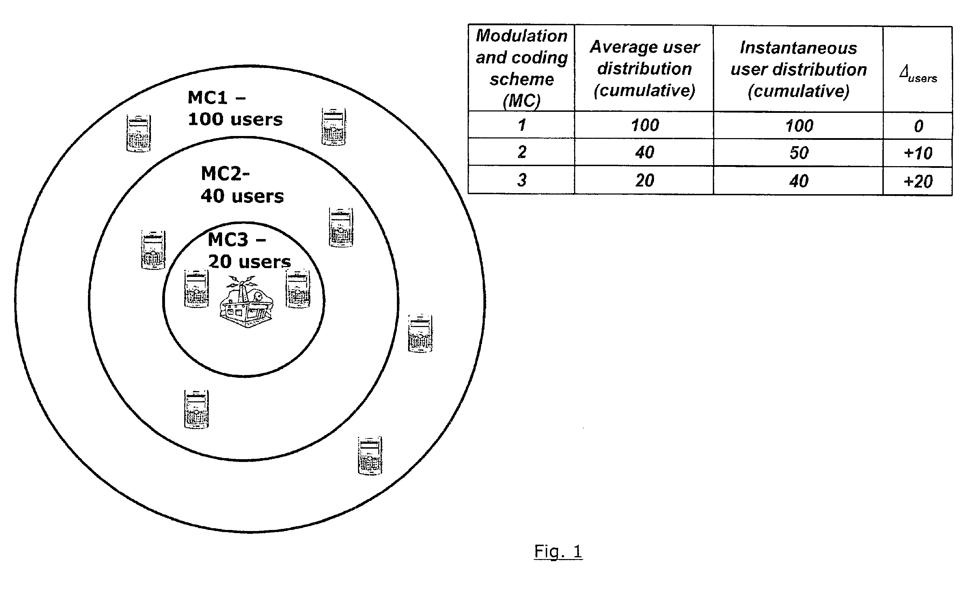

Fig. 1 illustrates the general scenario, with three different queues having correspondingly different modulation and coding schemes MC1 to MC3 and also a different number of intended users based on the average channel conditions.

MC1, the scheme with the lowest rate, intends to serve 100 users and MC3, the scheme with the highest rate, intends to serve 20 users based on the average conditions as initial set of parameters. Due to an instantaneous improvement of the channel conditions there may be a moment of time where MC2 could serve 50 users instead of 40 and where MC3 could serve 40 users instead of 20. In the following there will be described embodiments which make use of such instantaneous channel quality variations for scheduling.

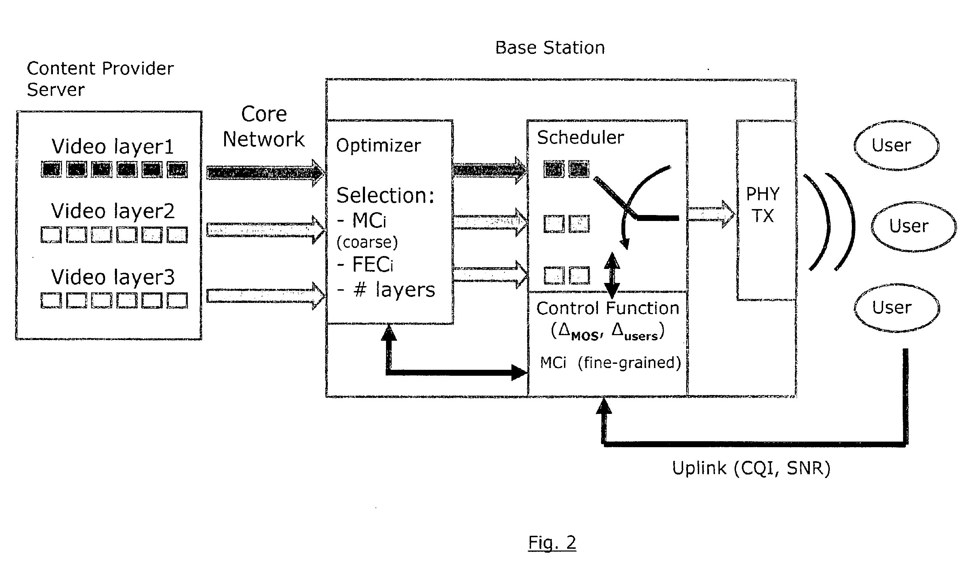

Fig.2 schematically illustrates an architecture overview of an embodiment of the inventions. Video streams are generated at the server (content provider, left hand side), transmitted through the core network to a base station. Here, video packets are processed and then broadcast after being selected for transmission by the scheduler in an opportunistic manner.

Either multiple video multicast streams, multiple video broadcasts, or multiple video broadcast sub-streams (e.g., scalable video layers encoded with H.264/SVC, when users in the cell can subscribe to one of more video layers/ streams) can be generated at the server or content provider (left hand side, Fig. 2).

For ease of explanation, there will be discussed here only the case of scalable video streams generated at the server (content provider) and provided through the core network to a base station. However, the same reasoning directly applies to multiple multicast or broadcast streams (straightforward extension) generated at the servers and then sent through the core network to a base station, to serve different (video quality-based) classes/clusters of users.

A scalable video stream is generated at the server of the content provider. In order to provide different levels of video quality for the same original video stream to classes/clusters of users subscribing to different video quality levels, the server generates scalable sub-streams (e.g., in Fig.2, video layer 1 with low, layer 2 with medium and layer 3 with high video quality). One may assume standard H.264-SVC coding, which allows generating a video sub-stream with base video quality and several enhancement video layers to refine that base video quality. One may assume that in Fig. 2, video layer 1 is the base layer (BL), video layer 2 is the first enhancement layer (EL1) and video layer 3 the second enhancement layer (EL2). In general, the SVC coder can generate a higher number of enhancement layers, but in the present embodiment N is set to 2.

The video sub-streams are sent through the core network to the base stations. In Fig. 2 one may consider only one base station on the right hand side. At the base station, the video packets are temporarily stored in queues per (sub-) stream and they are further processed, for instance, on a per-GOP basis, in a module located inside or close to the base station. An Optimizer module implemented inside or close to the base station decides how many video layers, and which modulation/coding scheme (MC) and Forward Error Correction (FEC) each selected video layer will be sent with, in the following round (e.g., the next GOP). These decisions are taken upon receiving feedback messages from the users in uplink, indicating their channel state (e.g., CQI, SNR). This optimizer operates based on average channel conditions, in other words the initial parameters which result from this optimizer are actually based on channel conditions which were averaged over a period longer than one round, and they are periodically calculated making use of average channel conditions.

Moreover, the total available channel rate for the multicast/broadcast channel plays a fundamental role to make sure that all packets queued in the scheduler will be sent in the next round (GOP), thus this information needs to be obtained through feedback messages from the receivers.

The Optimizer relates to the determination of the "initial set of parameters" based on which the embodiment of the present invention, namely the scheduler, then operates. In the following there is given a short description of how it works, because it closely interacts with the scheduler and its control Function Module which then performs the actually scheduling.

Once the modulation and coding schemes are assigned to each selected video layer, the Optimizer assigns the appropriate amount of application layer FEC to each of the layers, taking into account the channel capacity constraint (which gives also the number of layers that can be sent) and the trade-off between source and error correction rate. The Optimizer, in order to compute the best MC and FEC for each layer to be transmitted, needs to know the average user distribution and the average channel capacity, so that to ensure that the BS has enough resources to multicast/broadcast the whole next video GOP, e.g. all packets belonging to the layers selected by the Optimizer to be sent. The Optimizer solves this optimization problem using one of the available algorithms in the literature (see e.g., "Broadcast Video Streaming in Cellular Networks: An Adaptation Framework for Channel, Video and AL-FEC Rates Allocation" D. Munaretto, D. Jurca and J. Widmer, ICST International Wireless Internet Conference (WICON 2010), Singapore, Singapore, March 2010).

As a result of the optimizer there is an initial set of parameters which is based on averaged channel quality, and then based thereon the scheduler according to an embodiment of the invention operates.

Once MC and FEC are selected for each video layer, the opportunistic Scheduler selects at each time instant from which queue the next video packet to be sent will be taken. The decision to be made at the scheduler is taken in collaboration with a Control Function Module (which may be a part of the scheduler or may be a separate entity). The details of the operation of the scheduler and the Control Function Module according to one embodiment will be described in the following.

In the Control Function Module, the user distribution (instantaneous and average users' CQI/SNR) is provided via feedback messages (in the uplink channel) and stored in tables, where the Module computes the best operational modulation and coding scheme MCs and its associated packet loss probability for each individual user or group of users. Given a certain $MC_i$, the Module computes the subset of modulation and coding schemes that can be used, and that are decodable by user i. This information will be then used by the Optimizer to assign the modulation and coding schemes MC for each transmitted video layer, based on the computation aforementioned.

The base station receives from the server the information about the difference of video quality between (sub-) streams, $\Delta_{MOS}$. Here the quality indicator may e.g. any quality indicator such as the "mean opinion score" MOS, or any other quality indicator. Apart from indicating the quality the he parameter $\Delta_{MOS}$ may also be a parameter indicating the relative (or absolute) importance of the packets in the queue, for the relative importance this may be expressed or may mean the relative importance compared to other queues. Similarly, instead of the relative quality difference indicator also an absolute quality indicator may be used. The Control Function Module then uses this information in combination with the average and instantaneous user distributions to let the scheduler opportunistically select the queue of video packets to be prioritized for transmission.

As already mentioned before, the parameters of the initial set which are varied can be different. At first there will be described an embodiment where the intended number of users is the parameter which is varied. The embodiment may be called a video quality-based opportunistic scheduler.

In this module, the BS selects the video packet to be multicast/broadcast in an opportunistic fashion at each transmission opportunity. The user distribution, i.e., the number of users that can demodulate packets transmitted with a certain MC, is varying in the time and in the space domains. For this reason, the BS needs to know from the Control Function Module how many users can demodulate packets delivered with $MC_1$, $MC_2$, and so on, before scheduling the video packets from a queue. This is illustrated in the following Table 1 which shows an example of average, instantaneous, and differential user distributions at a certain time instant t.

Table 1:

| MC | Average user distribution | Instantaneous user distribution | $\Delta_{users}$ |
|---|---|---|---|
| 1 | 100 | 100 | 0 |
| 2 | 40 | 50 | +10 |
| 3 | 20 | 40 | +20 |

Thanks to the feedback messages received from the users, the Control Function Module can update the average user distribution (information needed by the Optimizer as aforementioned to assign to each selected video layer a certain MC and FEC) and the instantaneous user distribution. The difference between the average and instantaneous user distribution gives $\Delta_{users}$, the differential user distribution, at each time instant t (a simple example being shown in Tab. 1). Therefore $\Delta_{users}$ may be regarded as a "variation of the initial set of parameters" which is based on the instantaneous channel condition.

Now it will be described how a "profit indicator" is determined which can then be evaluated to check which variation of the initial parameter leads to the highest "profit" and then ultimately leads to the choice of the packet to be scheduled.

The optimization problem solved by the Optimizer gives an input for the Control Function Module: once a MC is assigned to each video layer. An example is given below in Table 2. This can be mapped to the average and instantaneous user distributions (an example of which is given in Table 1). Table 2 shows an example of 3 scalable video layers: $\Delta_{MOS}$ (dB) represents the difference in quality between subsequent layers (this has previously also been refrred to as Dvi); MC is the modulation and coding scheme associated to each layer (Fig. 2), as computed by the Optimizer.

Table 2:

| Video Layer | $\Delta_{MOS}$ (dB) | MC |
|---|---|---|
| 1 | 30 | 1 |
| 2 | 6 | 2 |
| 3 | 2 | 3 |

Furthermore, given the list of $\Delta_{MOS}$ from the server, i.e., the gain in dB achieved when receiving this enhancement layer, the Control Function Module can compute the following maximization problem:

$$\max_{i \in N, j \in (n - \{1\})} \Delta_{MOS\,j} * \Delta_{users\,i}$$

Thus, the scheduler selects a packet from queue j, with $MC_j$ and $FEC_j$, if the product between the gain in terms of video quality ($\Delta_{MOS}$) and the difference between instantaneous and average user distribution for that queue ($\Delta_{users}$) (this has previously also been referred to as DUi), i.e., number of "extra-users" who can decode packets transmitted with such $MC_j$, is maximum. This procedure takes into account the fact that in case some users "move" from $MC_l$ to $MC_{l+1}$ due to a better instantaneous aggregate channel quality, and the total number of users that can decode when using $MC_{l+1}$ has increased with respect to the average, then the scheduler gets the opportunity to send as many packets as possible at this "good" time instant to this "instantaneously larger" class of recipients.

It should benoted that in the above equation the term

This leads to an increase in the number of users, for example in case of scalable sub-streams, getting video packets from the enhancement layers, while ensuring that all queued packets for the current GOP can be sent (here, the channel capacity constraint is considered beforehand in the Optimizer as mentioned before). The case where not all packets can be scheduled due to an unforeseen severe degradation in the channel quality will be discussed further below.

In a standard scheduler working on a per-GOP basis, at the beginning packets belonging to the base layer are sent, and then packets from enhancement layer 1, 2, and so on are delivered. In contrast to this "sequential procedure", the opportunistic scheduler according to the embodiment ensures with high probability that the base station can send all packets for this GOP selected by the Optimizer, while at the same time allowing that as soon as the aggregate channel conditions for a group of users improve, packets belonging to higher order MCs will be pushed out with high priority, thus increasing the number of users receiving (and successfully demodulating) such high order MC packets.

In other words: The optimizer ensures that the GOP can be transmitted based on the overall average channel conditions with a certain MC in each layer. The scheduler then uses the instantaneous variation of the channel quality to "elevate" some users to a higher modulation and coding scheme than they would receive based on the initial parameters chosen by the optimizer, and this elevation is done by scheduling the corresponding packet where the benefit as indicated by a profit indicator is maximum. Due to the initial set of parameters being based on the overall average channel conditions it is made sure that such a "preferred" scheduling of higher layer packets due to a "chance" offered by an instantaneous channel quality improvement does not exclude the lower quality layers from being scheduled later, since the optimizer has chosen the initial set of parameters such that all the layers fit into the channel conditions. However, a "chance" is used in an opportunistic way by the scheduler to elevate some users to a higher quality level.

The opportunistic scheduler therefore increases the number of users that can receive packets from the higher video layers. In turn, these packets can be decoded by the users and increase the received quality of the video. In the worst case, if at the end of the round the user cannot benefit from such enhancement layer packets because of failures in the decoding procedure, the user will simply drop such further packets, resulting in the same video quality as in the standard case (i.e., receiving lower layer packets only).

Furthermore, one may also consider the extreme case where the periodic evaluation made by the Optimizer for the current GOP overestimates the current channel conditions and user distributions, due to sudden jumps of users from a MC region to another in very short time intervals. In this case, the Control Function Module, given the negative output from the maximization, recognizes that it cannot ask the scheduler to transmit some packets with the assigned MC (the number of users able to demodulate such packets is lower than what was computed by the Optimizer). In this case, the scheduler according to one embodiment marks the transmitted packets so that they are transmitted at a lower MC scheme which is decoded by a number of users close to the designated one by the Optimizer. In the worst case, this translates into having the PHY sending these packets with the lowest order MC, which runs the risk of having some left packets in the queues which cannot be scheduled for transmission in the current GOP. These remaining packets may be dropped later on to make room for the new GOP, which will be ready to enter the scheduler module.

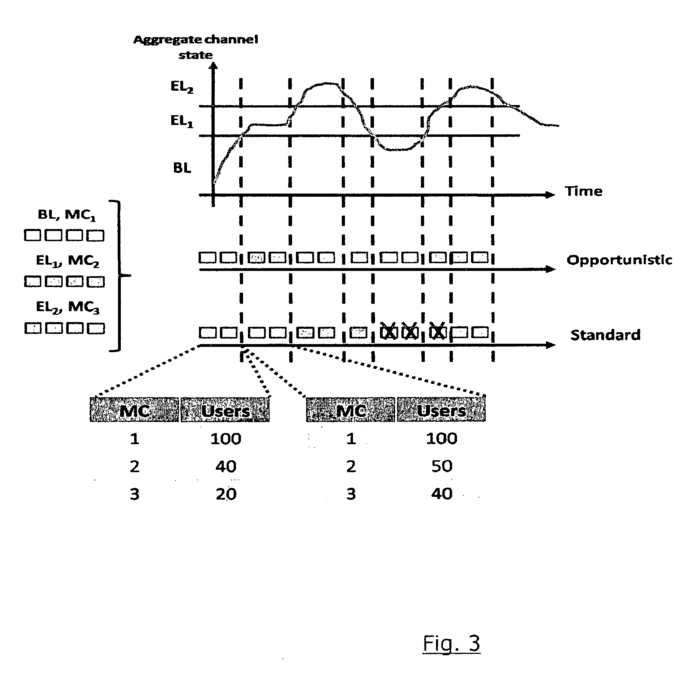

Fig. 3 shows an Example of the benefits of an opportunistic scheduler compared to the standard scheduling scheme. The example uses a video with 3 quality layers (each of them with a specific MC selected by the Optimizer). The plot on top shows the average aggregate users' channel quality and the bottom of the figure shows the user distribution in the first two time intervals. Note that $MC_1$ is the lowest rate MC (working for bad channel conditions) and these MCs are ordered from the lowest to the highest channel conditions.

In Fig. 3, there is given an example of how an embodiment of the invention is beneficial for multicast/broadcast video streaming in cellular networks. In the plot at the top of the figure, there is shown how the average aggregate users' channel quality changes over time. The standard scheduler schedules the packets in the queues in a FIFO way, based on the packet deadlines and in an ascending order of the video layers. It does not take into account the instantaneous variations of channel characteristics for the targeted users.

With an embodiment of the invention, the BS decides to send packets of higher order MCs when a large set of users are experiencing better channel conditions, which means that at that time instant a certain percentage of users which in average cannot demodulate packets sent with a high MC due to their usual channel conditions, now can decode such packets (opportunistic scheduling procedure). E.g. in time slot 2 the standard procedure would schedule a Base Layer BL packet using coding scheme MC1, but due to the better channel conditions a layer 1 EL1 packet with coding scheme MC2 is scheduled. Similarly, in slot 3 even a layer 2 packet using MC3 is scheduled due to the good channel conditions. As shown in Fig. 3, this results in a better utilization of channel resources and in an enhancement of the overall users' perceived video quality.

In the worst case, with this embodiment, a BS will perform exactly as it would perform without the opportunistic scheduler, but on average, the perceived quality would be significantly improved.

Now there will be described a further embodiment where the parameter of the initial set which is varied is not the number of users but the modulation and coding scheme. Since this embodiment "frees" some bandwidth which can lead to a more robust behaviour, it may be called a robust opportunistic scheduler.

Such a robust opportunistic scheduler according to one embodiment uses the instantaneous channel characteristics of targeted users in order to save channel bandwidth when possible. When channel conditions are good, the scheduler increases the MC scheme for transmission (i.e. increasing the rate or throughput), resulting in less time (i.e., wireless resources in terms of channel occupancy) to transmit the video layer to the given number of users. The new MC scheme is chosen so that the actual number of receivers (given the current channel conditions) is not below the target average number of users as computed by the Optimizer. The highest MC which satisfies this constraint is chosen for transmission. Contrary to the previous scheduler (which varied the number of user) when the scheduler uses for each video layer the MC chosen by the Optimizer, in this case, the scheduler can change the MC with each time interval, based on the received channel state information.

As discussed previously, the Control Function Module provides the instantaneous and up-to-date average user distribution. The robust opportunistic scheduler may select at each transmission opportunity a packet from the queue as described before with the algorithm of the quality based scheduler. However, it can also decide to send it with a higher MC scheme, saving channel bandwidth. The higher MC scheme according to one embodiment is chosen so that the targeted pre-computed number of users that can receive the packet is matched. Hence, instead of increasing the number of users that can decode the packet, as in the previous embodiment, one may decide to change the transmission policy so that one can save channel bandwidth. While this instance of the scheduler does not increase the overall quality of the received video for the targeted clients, it will use less channel resources than computed by the Optimizer because the modified MC uses less such resources for the transmission.

Table 3 shows an example representing the number of users that can be served with a certain MC, in a distinct time instance (columns 3-5) compared to the intended number of users (column 2). Video layer 1 can be sent with MC1; layer 2 can be sent with either MC2 or MC3 because for both coding schemes the number of users is at least the intended one (which is 40), and layer 3 can be scheduled with MC3. In such a situation the robust scheme will choose MC3 for layer 2 instead of MC2 to thereby save resources.

Table 3:

| Video layer | Users to be served | Users with MC1 | Users with MC2 | Users with MC3 |
|---|---|---|---|---|
| 1 | 100 | 100 | 50 | 40 |
| 2 | 40 | -- | 50 | 40 |
| 3 | 20 | -- | -- | 40 |

Finally, the extra-channel rate available, saved previously by using always the highest MC possible, can be used:

a) for adopting lower MCs when the channel gets worse,
b) In other sessions,
c) To retransmit the most important video packets of the video so that to increase the probability of having correctly received such packets,
d) To provide additional FEC (by the Optimizer) via communication between modules.

Both schemes can be easily modified for scenarios in which users are grouped in different priority classes, or users having minimum quality requirements, as a function of their premium subscription that they pay to the network operator. In this case, the channel conditions should be tracked for each individual user belonging to a premium class, and the MC scheme for transmission can be adapted such that it accommodates even the worst user of the given premium class. This will act as an extra constraint for scheduling decision, while the coarse-time optimization will no longer be based on average user numbers, rather on the minimum imposed MC for a certain premium group.

The two schemes which have been described before, namely the quality based scheduler and the robust scheduler may in one embodiment also be used in a combined way such that there results a hybrid opportunistic scheduler.

In such a hybrid opportunistic scheduler, the core module computes a MC for each queue of video packets that is with respect to the MC in between what an instance of a quality based scheduler (case a) and a robust opportunistic scheduler (case b) would select.

The scheduler computes the expected quality improvement as in case a) for each queue of video packets, based on the MC selected, and normalizes it by the average packet transmission time that this MC would require for transmission, as computed in case b). This calculation may be performed for each layer based on a plurality of modulation and coding schemes, namely for the originally intended one for this layer, and further also for any "higher" modulation and coding schemes which are possible due to the higher channel quality. For these possible variations then the "profit indicator" may be obtained, which is calculated based on the profit indicator as in case a) (the quality improvement) divided by the transmission time, if the modulation scheme is varied. This procedure gives a wider range of scheduling opportunities to a mobile operator, since the normalization can include further parameters, for a more precise tuning. At the end, the scheduler selects the first video packet to be sent from the queue with highest expected normalized quality improvement. The equation below shows the normalization computed by the hybrid scheduling mechanism.

$$\Delta_{MOS_j} * \Delta_{users_i} \ / \ tx\_time_j$$

Here the numerator is the profit indicator as in case a), and the denominator is the transmission time which results from the change of the modulation scheme. In this manner a profit indicator can be calculated which then is maximized such that the variation of the initial parameters which leads to the maximum profit is chosen and the corresponding packet is scheduled, possibly then being sent with a higher MC.

Therefore, for the hybrid scheduler the possible variation of initial parameters for a certain queue $q_i$ comprises a higher modulation and coding scheme $HMC_i$ and a differential number of users $Du_i$ which are additionally able to receive the video stream of queue $q_i$ even when said stream is encoded at said higher coding and modulation scheme $HMC_i$. The profit indicator is determined based on the product of $DU_i$ and the relative importance $Dv_i$ of the stream of queue $q_i$ divided by the transmission time which is necessary when using said higher modulation and coding scheme $HMC_i$.

In this way there can be implemented a hybrid scheduler which takes into account both types of possible variations, the modification of the number of users as in the quality based scheduler, and the modification of the modulation and coding scheme, by calculating a suitable profit indicator.

It should be mentioned that the relative importance indicator may e.g. an indicator which indicates the importance of a certain queue or stream, or it may be a quality indicator (like in the case of scalable video coding the quality difference between the individual layers).

Furthermore, It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a computing device acting as a base station or access point or anything alike.

## Claims

1. A scheduling method for scheduling packets of a plurality of n video streams which are multicast or broadcast at a base station, said scheduling method selecting from the available queues at each scheduling round the queue from which the next packet is to be scheduled for transmission, said scheduling method performing said selection based the following:

    a set of initial parameters which are provided to said scheduler in advance of said selection and which are based on average channel conditions averaged over more than one scheduling round, said parameters comprising:

i) the number n of queues qi, where each queue qi contains packets from a specific video stream of said n video streams;

ii) for each queue qi, the intended modulation and coding scheme MCi for the broadcast transmissions of said queue qi: **characterized by** further comprising:

iii) for each queue qi, the intended number of users NUAVGi for the reception of packets from said queue qi;

and said selection further being based on instantaneous channel conditions of the individual users receiving said video streams, wherein said scheduling method further comprising:

for each queue qi, determining whether based on the instantaneous channel conditions of the users a variation of said set of initial parameters is possible by determining one of the following,

a) for each queue qi, determining the difference between the intended number of users NUAVGi and the instantaneous number of users which are able to receive packets from that queue qi based on the modulation and coding scheme qi to thereby obtain a differential number of users DUi for said queue qi as a possible variation of said parameters; or

b) for each queue qi, determining a higher modulation and coding scheme HMCi different from the one assigned to this queue qi by said initial set of parameters as a possible variation of said initial parameters, said higher modulation and coding scheme HMCi being determined such that it achieves a higher possible rate, and further being determined under the condition that the expected instantaneous number of users which based on their instantaneous channel condition are able to decode said higher modulation and coding scheme HMCi is at least as large as the intended number of users NUAVGi for said queue qi as given by said initial set of parameters; and said method further comprising:

based on said possible variation of parameters (DUi or HMCi), determining for each queue qi a profit indicator indicating the overall profit for the network or the users if said variation of initial parameters is used for transmitting the next packet;

selecting the queue qi for which said profit indicator is maximum as the queue from which the next packet is selected.

2. The method of claim 1, wherein said initial set of parameters further comprises:

ii) for each queue qi, the relative importance DVi of the packets in said queue qi;

wherein said possible variation of said initial set of parameters comprises said differential number of users DUi, and wherein said profit indicator for each queue qi is determined based on the differential number of users DUi multiplicated with the relative importance DVi of the packets in said queue qi.

3. The method of claim 1 or 2, wherein said possible variation of said initial set of parameters comprises to use said higher modulation and coding scheme HMCi, wherein said higher modulation and coding scheme is chosen such that for a given queue qi the highest possible modulation scheme which still can be received by at least the intended number of users NUAVGi is chosen as the higher modulation and coding scheme HMCi for said queue, and wherein said profit indicator for a queue qi is based on the reduction in transmission time which is achieved by using said higher modulation and coding scheme HMCi for said queue qi, and wherein the queue qi where said profit indicator is maximum is chosen for the transmission of said next packet, and where the next packet then is transmitted using the higher modulation and coding scheme HMCi.

4. The method of one of the preceding claims, wherein said possible variation of initial parameters for a certain queue qi comprises a higher modulation and coding scheme HMCi and a differential number of users Dui which are additionally able to receive the video stream of queue qi even when said stream is encoded at said higher coding and modulation scheme HMCi, and wherein said profit indicator is determined based on the product of DUi and the relative importance Dvi of the stream of queue qi divided by the reduction in transmission time the transmission time which is necessary when using said higher modulation and coding scheme HMCi.

5. The method of one of the preceding claims, wherein the selection of a queue from which the next packet is to be scheduled is based on the differential number of users DUi multiplicated with the relative importance DVi of the packets in said queue qi, and wherein

the next packet which is to be transmitted is transmitted based on a higher modulation and coding scheme HMCi which is chosen based on the instantaneous channel conditions of the users which are capable to receive packets from said selected queue.

6. The method of one of claims 1 to 5, wherein
said initial parameters are chosen such that the aggregated rates of the n video streams, given their chosen modulation and coding scheme, do not exceed the channel capacity.

7. The method of one of the preceding claims, wherein
said relative importance indicator Dvi is a quality indicator indicating the quality difference between two different video streams.

8. The method of one of the preceding claims, wherein
said n video streams are ranked according to their relative importance or priority, and each of said video streams and its corresponding queue has assigned a corresponding relative importance indicator.

9. The method of one of the preceding claims, wherein
said video streams are video streams which are encoded according to one of the following coding schemes:

scalable video coding SVC ; or
multiple description coding MDC.

10. A scheduling apparatus for scheduling packets of a plurality of n video streams which are multicast or broadcast at a base station, said scheduling apparatus selecting from the available queues at each scheduling round the queue from which the next packet is to be scheduled for transmission, said scheduling apparatus performing said selection based the following:

a set of initial parameters which is provided to said scheduler in advance of said selection and which is based on average channel conditions averaged over more than one scheduling round, said parameters comprising:

i) the number n of queues qi. where each queue qi contains packets from a specific video stream of said n video streams;
ii) for each queue qi, the intended modulation and coding scheme MCi for the broadcast transmissions of said queue qi; **characterized by** further comprising:
iii) for each queue qi, the intended number of users NUAVGi for the reception of packets from said queue qi;

and said selection further being based on instantaneous channel conditions of the individual users receiving said video streams, wherein said scheduling apparatus further comprising:

a module adapted to determine, for each queue qi, whether based on the instantaneous channel conditions of the users a variation of said set of initial parameters is possible by determining one of the following:

a) for each queue qi, determining the difference between the intended number of users NUAVGi and the instantaneous number of users which are able to receive packets from that queue qi based on the modulation and coding scheme qi to thereby obtain a differential number of users DUi for said queue qi as a possible variation of said parameters; or
b) for each queue qi, determining a higher modulation and coding scheme HMCi different from the one assigned to this queue qi by said initial set of parameters as a possible variation of said initial parameters, said higher modulation and coding scheme HMCi being determined such it achieves a higher possible rate, and further being determined under the condition that the expected instantaneous number of users which based on their instantaneous channel condition are able to decode said higher modulation and coding scheme HMCi is at least as large as the intended number of users NUAVGi for said queue qi as given by said initial set of parameters; and said apparatus further comprising:

a module for, based on said possible variation of parameters (DUi or HMCi), determining for each queue qi a profit indicator indicating the overall profit for the network or the users if said variation of initial parameters is used for transmitting the next packet;
a module for selecting the queue qi for which said profit indicator is maximum as the queue from which the next packet is selected.

11. The scheduling apparatus of claim 10, wherein said initial set of parameters further comprises:

iv) for each queue qi, the relative importance DVi of the packets in said queue qi;

wherein said possible variation of said initial set of parameters comprises said differential number of users DUi, and wherein said profit indicator for each queue qi is determined based on the differential number of users DUi multiplicated with the relative importance DVi of the packets in said queue qi.

12. The scheduling apparatus of claim 10 or 11, wherein said possible variation of said initial set of parameters comprises to use said higher modulation and coding scheme HMCi, wherein said higher modulation and coding scheme is chosen such that for a given queue qi the highest possible modulation scheme which still can be received by at least the intended number of users NUAVGi is chosen as the higher modulation and coding scheme HMCi for said queue, and wherein
said profit indicator for a queue qi is based on the reduction in transmission time which is achieved by using said higher modulation and coding scheme HMCi for said queue qi, and wherein
the queue qi where said profit indicator is maximum is chosen for the transmission of said next packet, and where the next packet then is transmitted using the higher modulation and coding scheme HMCi.

13. The scheduling apparatus of one of claims 10 to 12, wherein
said possible variation of initial parameters for a certain queue qi comprises a higher modulation and coding scheme HMCi and a differential number of users Dui which are additionally able to receive the video stream of queue qi even when said stream is encoded at said higher coding and modulation scheme HMCi, and wherein said profit indicator is determined based on the product of DUi and the relative importance Dvi of the stream of queue qi divided by the reduction in transmission time the transmission time which is necessary when using said higher modulation and coding scheme HMCi.

14. The scheduling apparatus of one of claims 10 to 13, further comprising:

A module for carrying out a method according to one of claims 5 to 9.

15. A computer program comprising computer program code which when being executed on a computer enables said computer to carry out a method according to one of claims 1 to 9.


**Patentansprüche**

1. Ein Scheduling-Verfahren zum Schedulen von Paketen einer Mehrzahl von n Videostreams, die an einer Basisstation gemulticastet oder gebroadcastet werden, wobei das Scheduling-Verfahren von den verfügbaren Queues bei jeder Scheduling-Runde die Queue aussucht, von der das nächste Paket für die Übertragung gescheduled werden soll, wobei das Scheduling-Verfahren die Auswahl basierend auf Folgendem ausführt:

Ein Satz von anfänglichen Parametern, die dem Scheduler vor der Auswahl geliefert werden und die auf durchschnittlichen Kanalbedingungen basieren, die über mehr als eine Scheduling-Runde gemittelt wurden, wobei die Parameter aufweisen:

i) Die Zahl n von Queues qi, wobei jede Queue qi Pakete von einem spezifischen Videostream der n Videostreams enthält;
ii) für jede Queue qi, das intendierte Modulations- und Codierschema MCi für die Broadcast-Übertragungen der Queue qi; **gekennzeichnet dadurch, dass** sie ferner aufweisen:
iii) Für jede Queue qi, die intendierte Zahl von Benutzern NUAVGi für den Empfang von Paketen von der Queue qi;

und wobei die Auswahl ferner basiert auf instantanen Kanalbedingungen der individuellen Benutzer, die die Videostreams empfangen, wobei das Scheduling-Verfahren ferner aufweist:

Für jede Queue qi, Ermitteln ob basierend auf den instantanen Kanalbedingungen der Benutzer eine Variation des Satzes von anfänglichen Parametern möglich ist durch Ermitteln von einem der Folgenden:

a) Für jede Queue qi, Ermitteln der Differenz zwischen der intendierten Zahl von Benutzern NUAVGi und der instantanen Zahl von Benutzern, die in der Lage sind, Pakete von der Queue qi zu empfangen basierend auf dem Modulations- und Codierschema qi, um dadurch eine differentielle Zahl von Benutzern DUi für die Queue qi als mögliche Variation der Parameter zu erhalten; oder

b) für jede Queue qi, Ermitteln eines höheren Modulations- und Codierschemas HMCi, das sich von dem der Queue qi zugewiesenen durch den anfänglichen Satz von Parametern als eine mögliche Variation der anfänglichen Parameter unterscheidet, wobei das höhere Modulations- und Codierschema HMCi derart ermittelt wird, dass es eine höhere mögliche Rate erreicht und ferner unter der Bedingung ermittelt wird, dass die erwartete instantane Anzahl von Benutzern, die basierend auf ihrer instantanen Kanalbedingung in der Lage sind, das höhere Modulations- und Codierschema HMCi zu codieren, zumindest so groß ist wie die intendierte Zahl von Benutzern NUAVGi für die Queue qi wie gegeben durch den anfänglichen Satz von Parametern, und das Verfahren ferner aufweist:

Basierend auf der möglichen Variation von Parametern (DUi oder HMCi), Ermitteln für jede Queue qi eines Profitindikators, der den insgesamten Profit für das Netzwerk oder die Benutzer angibt, wenn die Variation von initialen Parametern für die Übertragung des nächsten Paketes verwendet wird;

Auswählen der Queue qi, für welche der Profitindikator maximal ist als die Queue, von der das nächste Paket ausgewählt wird

2. Das Verfahren nach Anspruch 1, wobei der anfängliche Satz von Parametern ferner aufweist:

ii) Für jede Queue qi, die relative Wichtigkeit DVi der Pakete in der Queue qi;

wobei die mögliche Variation des anfänglichen Satzes von Parametern die differentielle Anzahl von Benutzern DUi aufweist, und wobei der Profitindikator für jede Queue qi ermittelt wird basierend auf der differentiellen Anzahl von Benutzern DUi multipliziert mit der relativen Wichtigkeit DVi der Pakete in der Queue qi.

3. Das Verfahren nach Anspruch 1 oder 2, wobei die mögliche Variation des anfänglichen Satzes von Parametern umfasst: Verwenden des höheren Modulations- und Codierschemas HMCi, wobei das höhere Modulations- und Codierschema so gewählt wird, dass für eine gegebene Queue qi das höchste mögliche Modulationsschema, das noch empfangen werden kann durch zumindest die intendierte Anzahl von Benutzern NUAVGi ausgewählt wird als das höhere Modulations- und Codierschema HMCi für die Queue, und wobei
der Profitindikator für eine Queue qi basiert auf der Reduktion von Übertragungszeit, die erreicht wird durch Verwenden des höheren Modulations - und Codierschemas HMCi für die Queue qi, und wobei
die Queue qi, für die der Profitindikator maximal ist, ausgewählt wird für die Übertragung des nächsten Pakets, und wobei das nächste Paket dann übertragen wird unter Verwendung des höheren Modulations- und Codierschemas HMCi.

4. Das Verfahren nach einem der vorhergehenden Ansprüche, wobei
die mögliche Variation von anfänglichen Parametern für eine bestimmte Queue qi umfasst: Ein höheres Modulations- und Codierschema HMCi und eine differentielle Anzahl von Benutzern DUi, die zusätzlich in der Lage sind, den Videostream der Queue qi zu empfangen, selbst wenn der Stream mit dem höheren Codier- und Modulationsschema HMCi codiert ist, und wobei der Profitindikator ermittelt wird basierend auf dem Produkt von DUi und der relativen Wichtigkeit DVi des Streams der Queue qi, geteilt durch die Reduktion der Übertragungszeit, die notwendig ist, wenn das höhere Modulations- und Codierschema HMCi verwendet wird.

5. Das Verfahren nach einem der vorhergehenden Ansprüche, wobei die Selektion einer Queue, von der das nächste Paket gescheduled werden soll, basiert auf der differentiellen Anzahl von Benutzern DUi multipliziert mit der relativen Wichtigkeit DVi der Pakete in der Queue qi, und wobei
das nächste Paket, das übertragen werden soll, übertragen wird basierend auf einem höheren Modulations- und Codierschema HMCi, welches gewählt wird basierend auf den instantanen Kanalbedingungen der Benutzer, die in der Lage sind, Pakete von der ausgewählten Queue zu empfangen.

6. Das Verfahren nach einem der Ansprüche 1 bis 5, wobei
die anfänglichen Parameter gewählt werden derart, dass die aggregierten Raten der n Videostreams, bei Vorgabe ihres gewählten Modulations- und Codierschemas, die Kanalkapazität nicht überschreiten.

7. Das Verfahren nach einem der vorhergehenden Ansprüche, wobei
der relative Wichtigkeitsindikator DVi ein Qualitätsindikator ist, der den Qualitätsunterschied zwischen zwei unterschiedlichen Videostreams angibt.

8. Das Verfahren nach einem der vorhergehenden Ansprüche, wobei
die n Videostreams geordnet werden nach ihrer relativen Wichtigkeit oder Priorität, und jeder der Videostreams und seine entsprechende Queue einen entsprechenden zugewiesenen relativen Wichtigkeitsindikator hat.

9. Das Verfahren nach einem der vorhergehenden Ansprüche, wobei
die Videostreams Videostreams sind, die codiert werden nach einem der folgenden Codierschemata:

Skalierbares Videocoding SVC, oder
multiples Description-Coding MDC.

10. Eine Scheduling-Vorrichtung zum Schedulen von Paketen einer Mehrzahl von n Videostreams, die an einer Basisstation gemulticastet oder gebroadcastet werden, wobei die Scheduling-Vorrichtung aus den verfügbaren Queues bei jeder Scheduling-Runde die Queue auswählt, von der das nächste Paket für die Übertragung zu schedulen ist, wobei die Scheduling-Vorrichtung die Auswahl basierend auf dem Folgenden durchführt:

Ein Satz von anfänglichen Parametern, die dem Scheduler vor der Auswahl geliefert werden und die auf durchschnittlichen Kanalbedingungen basieren, die über mehr als eine Scheduling-Runde gemittelt wurden, wobei die Parameter aufweisen:

i) Die Zahl n von Queues qi, wobei jede Queue qi Pakete von einem spezifischen Videostream der n Videostreams enthält;
ii) für jede Queue qi, das intendierte Modulations- und Codierschema MCi für die Broadcast-Übertragungen der Queue qi, **gekennzeichnet dadurch, dass** sie ferner aufweisen:
iii) Für jede Queue qi, die intendierte Zahl von Benutzern NUAVGi für den Empfang von Paketen von der Queue qi;

und wobei die Auswahl ferner basiert auf instantanen Kanalbedingungen der individuellen Benutzer, die die Videostreams empfangen, wobei die Scheduling-Vorrichtung ferner aufweist:

ein Modul um für jede Queue qi zu ermitteln, ob basierend auf den instantanen Kanalbedingungen der Benutzer eine Variation des Satzes von anfänglichen Parametern möglich ist durch Ermitteln von einem der Folgenden:

a) Für jede Queue qi, Ermitteln der Differenz zwischen der intendierten Zahl von Benutzern NUAVGi und der instantanen Zahl von Benutzern, die in der Lage sind, Pakete von der Queue qi zu empfangen basierend auf dem Modulations- und Codierschema qi, um dadurch eine differentielle Zahl von Benutzern DUi für die Queue qi als mögliche Variation der Parameter zu erhalten; oder
b) für jede Queue qi, Ermitteln eines höheren Modulations- und Codierschemas HMCi, das sich von dem der Queue qi zugewiesenen durch den anfänglichen Satz von Parametern als eine mögliche Variation der anfänglichen Parameter unterscheidet, wobei das höhere Modulations- und Codierschema HMCi derart ermittelt wird, dass es eine höhere mögliche Rate erreicht und ferner unter der Bedingung ermittelt wird, dass die erwartete instantane Anzahl von Benutzern, die basierend auf ihrer instantanen Kanalbedingung in der Lage sind, das höhere Modulations- und Codierschema HMCi zu codieren, zumindest so groß ist wie die intendierte Zahl von Benutzern NUAVGi für die Queue qi wie gegeben durch den anfänglichen Satz von Parametern, und die Vorrichtung ferner aufweist:

Ein Modul um basierend auf der möglichen Variation von Parametern (DUi oder HMCi) für jede Queue qi einen Profitindikator zu ermitteln, der den insgesamten Profit für das Netzwerk oder die Benutzer angibt, wenn die Variation von initialen Parametern für die Übertragung des nächsten Paketes verwendet wird;
Ein Modul zum Auswählen der Queue qi, für welche der Profitindikator maximal ist als die Queue, von der das nächste Paket ausgewählt wird.

**11.** Die Scheduling-Vorrichtung nach Anspruch 10, wobei der anfängliche Satz von Parametern ferner aufweist:

ii) Für jede Queue qi, die relative Wichtigkeit DVi der Pakete in der Queue qi;

wobei die mögliche Variation des anfänglichen Satzes von Parametern die differentielle Anzahl von Benutzern DUi aufweist, und wobei der Profitindikator für jede Queue qi ermittelt wird basierend auf der differentiellen Anzahl von Benutzern DUi multipliziert mit der relativen Wichtigkeit DVi der Pakete in der Queue qi,

**12.** Die Scheduling-Vorrichtung nach Anspruch 10 oder 11, wobei die mögliche Variation des anfänglichen Satzes von Parametern aufweist:

Verwenden des höheren Modulations- und Codierschemas HMCi, wobei das höhere Modulations- und Codierschema so gewählt wird, dass für eine gegebene Queue qi das höchste mögliche Modulationsschema, das noch empfangen werden kann durch zumindest die intendierte Anzahl von Benutzern NUAVGi ausgewählt wird als das höhere Modulations- und Codierschema HMCi für die Queue, und wobei
der Profitindikator für eine Queue qi basiert auf der Reduktion von Übertragungszeit, die erreicht wird durch Verwenden des höheren Modulations - und Codierschemas HMCi für die Queue qi, und wobei
die Queue qi, für die der Profitindikator maximal ist, ausgewählt wird für die Übertragung des nächsten Pakets, und wobei das nächste Paket dann übertragen wird unter Verwendung des höheren Modulations- und Codierschemas HMCi.

**13.** Die Scheduling-Vorrichtung nach einem der Ansprüche 10 bis 12, wobei
die mögliche Variation von anfänglichen Parametern für eine bestimmte Queue qi umfasst: Ein höheres Modulations- und Codierschema HMCi und eine differentielle Anzahl von Benutzern DUi, die zusätzlich in der Lage sind, den Videostream der Queue qi zu empfangen, selbst wenn der Stream mit dem höheren Codier- und Modulationsschema HMCi codiert ist, und wobei der Profitindikator ermittelt wird basierend auf dem Produkt von DUi und der relativen Wichtigkeit DVi des Streams der Queue qi, geteilt durch die Reduktion der Übertragungszeit, die notwendig ist, wenn das höhere Modulations- und Codierschema HMCi verwendet wird.

**14.** Die Scheduling-Vorrichtung nach einem der Ansprüche 10 bis 13, ferner aufweisend:

Ein Modul zum Ausführen eines Verfahrens gemäß einem der Ansprüche 5 bis 9.

**15.** Ein Computerprogramm aufweisend Computerprogrammcode, der, wenn er auf einem Computer ausgeführt wird, den Computer in die Lage versetzt, ein Verfahren gemäß der Ansprüche 1 bis 9 auszuführen.

**Revendications**

**1.** Procédé d'ordonnancement pour ordonnancer des paquets d'une pluralité de n flux vidéo qui sont multidiffusés ou diffusés généralement au niveau d'une station de base, ledit procédé d'ordonnancement sélectionnant parmi les files d'attente disponibles à chaque cycle d'ordonnancement la file d'attente à partir de laquelle le paquet suivant doit être ordonnancé pour la transmission, ledit procédé d'ordonnancement effectuant ladite sélection sur la base de ce qui suit :

un ensemble de paramètres initiaux qui sont fournis audit ordonnanceur avant ladite sélection et qui sont basés sur des conditions de canal moyennes dont la moyenne est établie sur plus d'un cycle d'ordonnancement, lesdits paramètres comprenant :

i) le nombre n de files d'attente qi, où chaque file d'attente qi contient des paquets d'un flux vidéo spécifique desdits n flux vidéo ;
ii) pour chaque file d'attente qi, le schéma de modulation et de codage prévu MCi pour les transmissions de diffusion générale de ladite file d'attente qi, **caractérisé en ce qu'**ils comprennent en outre :
iii) pour chaque file d'attente, qi, le nombre d'utilisateurs prévu NUAVGi pour la réception de paquets de ladite file d'attente qi ;

et ladite sélection étant en outre basée sur des conditions de canal instantanées des utilisateurs individuels recevant lesdits flux vidéo, où ledit procédé d'ordonnancement comprend en outre :

pour chaque file d'attente qi, la détermination de si, sur la base des conditions de canal instantanées des utilisateurs, une variation dudit ensemble de paramètres initiaux est possible en déterminant un de ce suit :

a) pour chaque file d'attente qi, la détermination de la différence entre le nombre d'utilisateurs prévu NUAVGi et le nombre d'utilisateurs instantané qui sont en mesure de recevoir des paquets de cette file d'attente qi sur la base du schéma de modulation et de codage qi pour obtenir ainsi un nombre différentiel d'utilisateurs DUi pour ladite file d'attente qi comme une variation possible desdits paramètres ; ou

b) pour chaque file d'attente qi, la détermination d'un schéma de modulation et de codage supérieur HMCi différent de celui affecté à cette file d'attente qi par ledit ensemble initial de paramètres comme une variation possible desdits paramètres initiaux, ledit schéma de modulation et de codage supérieur HMCi étant déterminé de sorte qu'il atteigne un taux possible supérieur, et étant en outre déterminé selon la condition que le nombre d'utilisateurs instantané escompté qui, sur la base de leur condition de canal instantanée, sont en mesure de décoder ledit schéma de modulation et de codage supérieur HMCi est au moins aussi grand que le nombre d'utilisateurs prévu NUAVGi pour ladite file d'attente qi tel que donné par ledit ensemble initial de paramètres ; et ledit procédé comprenant en outre :

sur la base de ladite variation possible de paramètres (DUI ou HMCi), la détermination pour chaque file d'attente qi d'un indicateur de profit indiquant le profit global pour le réseau ou les utilisateurs si ladite variation de paramètres initiaux est utilisée pour transmettre le paquet suivant ;

la sélection de la file d'attente qi pour laquelle ledit indicateur de profit est maximum comme la file d'attente à partir de laquelle le paquet suivant est sélectionné.

2. Procédé selon la revendication 1, dans lequel ledit ensemble initial de paramètres comprend en outre :

ii) pour chaque file d'attente qi, l'importance relative DVi des paquets dans ladite file d'attente qui ; où ladite variation possible dudit ensemble initial de paramètres comprend ledit nombre différentiel d'utilisateurs DUi, et où ledit indicateur de profit pour chaque file d'attente qi est déterminé sur la base du nombre différentiel d'utilisateurs DUi multiplié par l'importance relative DVi des paquets dans ladite file d'attente qi.

3. Procédé selon la revendication 1 ou 2, dans lequel ladite variation possible dudit ensemble initial de paramètres comprend l'utilisation dudit schéma de modulation et de codage supérieur HMCi, où ledit schéma de modulation et de codage supérieur est choisi de sorte que, pour une file d'attente donnée qi, le schéma de modulation le plus élevé possible qui peut encore être reçu par au moins le nombre d'utilisateurs prévu NUAVGi soit choisi comme le schéma de modulation et de codage supérieur HMCi pour ladite file d'attente, et où

ledit indicateur de profit pour une file d'attente qi est basé sur la réduction du temps de transmission qui est réalisée en utilisant ledit schéma de modulation et de codage supérieur HMCi pour ladite file d'attente qi, et où

la file d'attente qi où ledit indicateur de profit est maximum est choisie pour la transmission dudit paquet suivant, et où le paquet suivant est ensuite transmis en utilisant le schéma de modulation et de codage supérieur HMCi.

4. Procédé selon l'une des revendications précédentes, dans lequel
ladite variation possible de paramètres initiaux pour une certaine file d'attente qi comprend un schéma de modulation et de codage supérieur HMCi et un nombre différentiel d'utilisateurs DUi qui sont additionnellement en mesure de recevoir le flux vidéo de la file d'attente qi même lorsque ledit flux est encodé audit schéma de modulation et de codage supérieur HMCi, et où ledit indicateur de profit est déterminé sur la base du produit de DUi et de l'importance relative Dvi du flux de la file d'attente qi divisé par la réduction du temps de transmission, le temps de transmission qui est nécessaire lors de l'utilisation dudit schéma de modulation et de codage supérieur HMCi.

5. Procédé selon l'une des revendications précédentes, dans lequel la sélection d'une file d'attente à partir de laquelle le paquet suivant doit être ordonnancé est basée sur le nombre différentiel d'utilisateurs DUi multiplié par l'importance relative DVi des paquets dans ladite file d'attente qi, et dans lequel
le paquet suivant qui doit être transmis est transmis sur la base d'un schéma de modulation et de codage supérieur HMCi qui est choisi sur la base des conditions de canal instantanées des utilisateurs qui sont capables de recevoir des paquets de ladite file d'attente sélectionnée.

6. Procédé selon l'une des revendications 1 à 5, dans lequel
lesdits paramètres initiaux sont choisis de sorte que les taux agrégés des n flux vidéo, étant donné leur schéma de modulation et de codage choisi, ne dépassent pas la capacité de canal.

**7.** Procédé selon l'une des revendications précédentes, dans lequel
ledit indicateur d'importance relative DVi est un indicateur de qualité indiquant la différence de qualité entre deux flux vidéo différents.

**8.** Procédé selon l'une des revendications précédentes, dans lequel
lesdits n flux vidéo sont classés selon leur importance relative ou leur priorité, et chacun desdits flux vidéo et sa file d'attente correspondante se voient affecter un indicateur d'importance relative correspondant.

**9.** Procédé selon l'une des revendications précédentes, dans lequel
lesdits flux vidéo sont des flux vidéo qui sont encodés selon l'un des schémas de codage suivants :

SVC pour scalable video coding (codage vidéo échelonnable) ; ou
MDC pour multiple description coding (codage à description multiple).

**10.** Appareil d'ordonnancement pour ordonnancer des paquets d'une pluralité de n flux vidéo qui sont multidiffusés ou diffusés généralement au niveau d'une station de base, ledit appareil d'ordonnancement sélectionnant parmi les files d'attente disponibles à chaque cycle d'ordonnancement la file d'attente à partir de laquelle le paquet suivant doit être ordonnancé pour la transmission, ledit appareil d'ordonnancement effectuant ladite sélection sur la base de ce qui suit :

un ensemble de paramètres initiaux qui sont fournis audit ordonnanceur avant ladite sélection et qui sont basés sur des conditions de canal moyennes dont la moyenne est établie sur plus d'un cycle d'ordonnancement, lesdits paramètres comprenant :

i) le nombre n de files d'attente qi, où chaque file d'attente qi contient des paquets d'un flux vidéo spécifique desdits n flux vidéo ;
ii) pour chaque file d'attente qi, le schéma de modulation et de codage prévu MCi pour les transmissions de diffusion générale de ladite file d'attente qi, **caractérisé en ce qu'**ils comprennent en outre :
iii) pour chaque file d'attente qi, le nombre d'utilisateurs prévu NUAVGi pour la réception de paquets de ladite file d'attente qi ;

et ladite sélection étant en outre basée sur des conditions de canal instantanées des utilisateurs individuels recevant lesdits flux vidéo, où ledit appareil d'ordonnancement comprend en outre :

un module adapté pour déterminer, pour chaque file d'attente qi, si, sur la base des conditions de canal instantanées des utilisateurs, une variation dudit ensemble de paramètres initiaux est possible en déterminant un de ce suit :

a) pour chaque file d'attente qi, la détermination de la différence entre le nombre d'utilisateurs prévu NUAVGi et le nombre d'utilisateurs instantané qui sont en mesure de recevoir des paquets de cette file d'attente qi sur la base du schéma de modulation et de codage qi pour obtenir ainsi un nombre différentiel d'utilisateurs DUi pour ladite file d'attente qi comme une variation possible desdits paramètres ; ou
b) pour chaque file d'attente qi, la détermination d'un schéma de modulation et de codage supérieur HMCi différent de celui affecté à cette file d'attente qi par ledit ensemble initial de paramètres comme une variation possible desdits paramètres initiaux, ledit schéma de modulation et de codage supérieur HMCi étant déterminé de sorte qu'il atteigne un taux possible supérieur, et étant en outre déterminé selon la condition que le nombre d'utilisateurs instantané escompté qui, sur la base de leur condition de canal instantanée sont en mesure de décoder ledit schéma de modulation et de codage supérieur HMCi est au moins aussi grand que le nombre d'utilisateurs prévu NUAVGi pour ladite file d'attente qi tel que donné par ledit ensemble initial de paramètres ; et ledit appareil comprenant en outre :

un module pour, sur la base de ladite variation possible de paramètres (DUI ou HMCi), déterminer pour chaque file d'attente qi un indicateur de profit indiquant le profit global pour le réseau ou les utilisateurs si ladite variation de paramètres initiaux est utilisée pour transmettre le paquet suivant ;
un module pour sélectionner la file d'attente qi pour laquelle ledit indicateur de profit est maximum comme la file d'attente à partir de laquelle le paquet suivant est sélectionné.

**11.** Appareil d'ordonnancement selon la revendication 10, dans lequel ledit ensemble initial de paramètres comprend en outre :

iv) pour chaque file d'attente qi, l'importance relative DVi des paquets dans ladite file d'attente qi ; où ladite variation possible dudit ensemble initial de paramètres comprend ledit nombre différentiel d'utilisateurs DUi, et ou ledit indicateur de profit pour chaque file d'attente qi est déterminé sur la base du nombre différentiel d'utilisateurs DUi multiplié par l'importance relative DVi des paquets dans ladite file d'attente qi.

**12.** Appareil d'ordonnancement selon la revendication 10 ou 11, dans lequel ladite variation possible dudit ensemble initial de paramètres comprend l'utilisation dudit schéma de modulation et de codage supérieur HMCi, où ledit schéma de modulation et de codage supérieur est choisi de sorte que, pour une file d'attente donnée qi, le schéma de modulation le plus élevé possible qui peut encore être reçu par au moins le nombre d'utilisateurs prévu NUAVGi soit choisi comme le schéma de modulation et de codage supérieur HMCi pour ladite file d'attente, et où ledit indicateur de profit pour une file d'attente qi est basé sur la réduction du temps de transmission qui est réalisée en utilisant ledit schéma de modulation et de codage supérieur HMCi pour ladite file d'attente qi, et où la file d'attente qi ou ledit indicateur de profit est maximum est choisie pour la transmission dudit paquet suivant, et où le paquet suivant est ensuite transmis en utilisant le schéma de modulation et de codage supérieur HMCi.

**13.** Appareil d'ordonnancement selon l'une des revendications 10 à 12, dans lequel ladite variation possible de paramètres initiaux pour une certaine file d'attente qi comprend un schéma de modulation et de codage supérieur HMCi et un nombre différentiel d'utilisateurs DUi qui sont additionnellement en mesure de recevoir le flux vidéo de la file d'attente qi même lorsque ledit flux est encodé audit schéma de modulation et de codage supérieur HMCi, et où ledit indicateur de profit est déterminé sur la base du produit de DUi et de l'importance relative Dvi du flux de la file d'attente qi divisé par la réduction du temps de transmission, le temps de transmission qui est nécessaire lors de l'utilisation dudit schéma de modulation et de codage supérieur HMCi.

**14.** Appareil d'ordonnancement selon l'une des revendications 10 à 13, comprenant en outre :

un module pour effectuer un procédé selon l'une des revendications 5 à 9.

**15.** Programme informatique comprenant un code de programme informatique qui, lorsqu'il est exécuté sur un ordinateur, permet audit ordinateur d'effectuer un procédé selon l'une des revendications 1 à 9.

| Modulation and coding scheme (MC) | Average user distribution (cumulative) | Instantaneous user distribution (cumulative) | $\Delta_{users}$ |
|---|---|---|---|
| 1 | 100 | 100 | 0 |
| 2 | 40 | 50 | +10 |
| 3 | 20 | 40 | +20 |

MC1 – 100 users

MC2- 40 users

MC3 – 20 users

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080225823 A1

- EP 1718002 A1

### Non-patent literature cited in the description

- **M. MEHRJOO ; M. DIANATI ; X. SHEN ; K. NAIK.** Opportunistic fair scheduling for the downlink of IEEE 802.16 wireless metropolitan area networks. *ACM Proceedings of the 3rd international conference on Quality of service in heterogeneous wired/wireless networks,* 2006
- **J. KIM ; J. CHO ; H. SHIN.** Resource Allocation for Scalable Video Broadcast in Wireless Cellular Networks. *IEEE WiMob,* 2005, 174-180

- **D. MUNARETTO ; D. JURCA ; J. WIDMER.** Broadcast Video Streaming in Cellular Networks: An Adaptation Framework for Channel, Video and AL-FEC Rates Allocation. *ICST International Wireless Internet Conference (WICON 2010), Singapore,* March 2010